Europäisches Patentamt

European Patent Office

Office européen des brevets

(19)

(11) **EP 1 236 985 A2**

(12) **EUROPEAN PATENT APPLICATION**

(43) Date of publication:
**04.09.2002 Bulletin 2002/36**

(51) Int Cl.[7]: **G01M 11/00**

(21) Application number: **02251193.5**

(22) Date of filing: **21.02.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **02.03.2001 JP 2001058538**

(71) Applicant: **Ando Electric Co., Ltd.
Tokyo 144-0052 (JP)**

(72) Inventors:
- **Aoki, Shoichi, c/o Ando Electric Co., Ltd.
  Tokyo 144-0052 (JP)**
- **Ichikawa, Akio, c/o Ando Electric Co, Ltd.
  Tokyo 144-0052 (JP)**

(74) Representative: **Dealtry, Brian
Eric Potter Clarkson,
Park View House,
58 The Ropewalk
Nottingham NG1 5DD (GB)**

(54) **Apparatus and method for measuring chromatic dispersion distribution**

(57) A chromatic dispersion distribution measuring apparatus which can determine a sign of a dispersion value, and a measuring method thereof. The chromatic dispersion distribution measuring apparatus comprises: a plurality of light sources (1-4) for emitting lights having different wavelengths; an intensity measuring section for measuring a light intensity of a four-wave mixed light caused by any two lights, as a function of a transmission distance; a chromatic dispersion calculating section for calculating a chromatic dispersion value of the optical device, in accordance with the light intensity; a time measuring section for measuring a propagation time of a reflected light caused by each light; and a sign determining section for determining a sign of the chromatic dispersion value of the optical device, on the basis of two different chromatic dispersion values and two propagation times of reflected lights of two lights related to the two chromatic dispersion values.

FIG.1

## Description

BACKGROUND OF THE INVENTION

Field of the Invention

The present invention relates to a chromatic dispersion distribution measuring apparatus for measuring a chromatic dispersion distribution in an optical device to be measured, such as an optical fiber, and a measuring method thereof.

Description of Related Art

In recent years, in order to satisfy demands for higher speed information communications, optical communication systems using optical fibers have been constructed. One of the factors in preventing the higher speed signal transmission and the longer distance transmission in the above optical communication systems, is the chromatic dispersion. The chromatic dispersion is a phenomenon caused by the factor that the speeds of lights transmitted through a medium vary according to the wavelengths of the lights. In the construction of the optical communication systems, it is necessary to grasp the chromatic dispersion characteristic in detail.

A chromatic dispersion distribution measuring apparatus for measuring the above chromatic dispersion is disclosed in, for example, Japanese Patent Application Publication No. Tokukai-Hei 10-83006 (corresponding to the United States Patent No. 5,956,131 and the European Patent Application No. 0819926A2). In the publication, the chromatic dispersion distribution measuring apparatus measures the dispersion distribution in a longitudinal direction of a fiber to be measured, as follows. Two lights having different wavelengths from each other are inputted into the fiber to be measured. A specific wavelength component is extracted by an optical band-pass filter from a four-wave mixed light caused by the interaction between backscattered lights of the two lights. A light having the extracted specific wavelength component is inputted into an Optical Time Domain Reflectometer (OTDR).

The Four-Wave Mixing (FWM) is a phenomenon caused by the non-linearity of a plurality of lights having different wavelengths from each other in an optical fiber. For example, when two lights have wavelengths $\lambda1$ and $\lambda2$ respectively, a wavelength $\lambda3$ of a light (Stokes ray) caused by this phenomenon and a wavelength $\lambda4$ of a light (anti-Stokes ray) caused by the phenomenon satisfy the following equation (1).

$$\lambda2 - \lambda1 = \lambda1 - \lambda4 = \lambda3 - \lambda2 \qquad (1)$$

However, in such a chromatic dispersion distribution measuring apparatus according to an earlier development, there are some problems as follows.

The above-described dispersion distribution measured by the above-described OTDR generally has the different value according to the fiber to be measured, and the fixed sign (positive (+) or negative (-)) to a random wavelength of inputted lights for every fiber to be measured. That is, the sign of the dispersion value is determined according to the fiber to be measured, regardless of the wavelength of the inputted light.

However, because the chromatic dispersion distribution measuring apparatus according to an earlier development, can measure only the absolute value of the above dispersion value, in order to measure the sign of the dispersion value, it is necessary to further provide a measuring apparatus for measuring the sign of the dispersion value besides the chromatic dispersion distribution measuring apparatus. Therefore, because the whole measuring apparatus including the chromatic dispersion distribution measuring apparatus according to an earlier development becomes complex, it has been desired that the functionality thereof is improved.

SUMMARY OF THE INVENTION

In order to solve the above-described problems, an object of the present invention is to provide a chromatic dispersion distribution measuring apparatus which can determine the sign of the dispersion value, and a measuring method thereof.

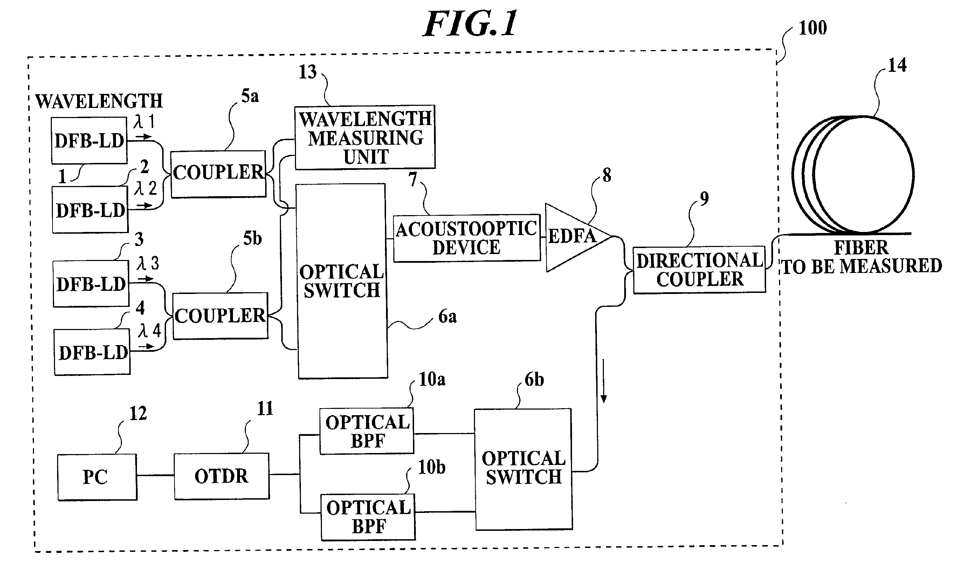

In accordance with a first aspect of the present invention, a chromatic dispersion distribution measuring apparatus (for example, an optical fiber chromatic dispersion distribution measuring apparatus 100 shown in FIG. 1), comprises:

a plurality of light sources (for example, four DFB-LDs 1 to 4 shown in FIG. 1) for emitting lights having different wavelengths from each other; an intensity measuring section (for example, an OTDR 11 shown in FIG. 1) for measuring a light intensity of a four-wave mixed light which is caused by any two lights of lights emitted from the plurality of light sources and which is outputted from an optical device to be measured, as a function of a transmission distance in the optical device, when the two lights are inputted into the optical device; a chromatic dispersion calculating section (for example, a PC 12 shown in FIG. 1) for calculating a chromatic dispersion value of the optical device, in accordance with the light intensity measured by the intensity measuring section, as the function of the transmission distance; a time measuring section (for example, a PC 12 shown in FIG. 1) for measuring a propagation time of a reflected light which is caused by each light of lights emitted from the plurality of light sources and which is transmitted from a predetermined point in the optical device, when each light is inputted into the optical device; and

a sign determining section (for example, a PC 12 shown in FIG. 1) for determining a sign of the chromatic dispersion value of the optical device, on the basis of two different chromatic dispersion values calculated by the chromatic dispersion calculating section, and two propagation times of reflected lights caused by two lights related to the two chromatic dispersion values respectively, of lights emitted from the plurality of light sources.

In accordance with a second aspect of the present invention, a chromatic dispersion distribution measuring method, comprises:

emitting a plurality of lights having different wavelengths from each other;

measuring a light intensity of a four-wave mixed light which is caused by any two lights of the plurality of lights and which is outputted from an optical device to be measured, as a function of a transmission distance in the optical device, when the two lights are inputted into the optical device;

calculating a chromatic dispersion value of the optical device, in accordance with the light intensity measured as the function of the transmission distance;

measuring a propagation time of a reflected light which is caused by each light of the plurality of lights and which is transmitted from a predetermined point in the optical device, when each light is inputted into the optical device; and

determining a sign of the chromatic dispersion value of the optical device, on the basis of two different chromatic dispersion values and two propagation times of reflected lights caused by two lights related to the two chromatic dispersion values respectively, of the plurality of lights.

In accordance with a third aspect of the present invention, a chromatic dispersion distribution measuring apparatus, comprises:

at least four light sources for emitting lights having different wavelengths from each other;

an intensity measuring section for measuring two different light intensities of two four-wave mixed lights which are caused by any two pairs of lights of lights emitted from the light sources and which are outputted from an optical device to be measured, as functions of transmission distances in the optical device, when the two pairs of lights are inputted into the optical device, for every pair of lights;

a chromatic dispersion calculating section for calculating two different chromatic dispersion values of the optical device, in accordance with the two light intensities measured by the intensity measuring section, respectively;

a time measuring section for measuring two different propagation times of two reflected lights one of which is caused by any one light of one pair of the two pairs of lights and transmitted from a predetermined point in the optical device, and the other of which is caused by any one light of the other pair of the two pairs of lights and transmitted from a predetermined point in the optical device, when the one light of the one pair of lights and the one light of the other pair of lights are individually inputted into the optical device; and

a sign determining section for determining a sign of the chromatic dispersion value of the optical device, on the basis of the two chromatic dispersion values calculated by the chromatic dispersion calculating section, and the two propagation times measured by the time measuring section.

In accordance with a fourth aspect of the present invention, a chromatic dispersion distribution measuring method, comprises:

emitting at least four lights having different wavelengths from each other;

measuring two different light intensities of two four-wave mixed lights which are caused by any two pairs of lights of the lights and which are outputted from an optical device to be measured, as functions of transmission distances in the optical device, when the two pairs of lights are inputted into the optical device, for every pair of lights;

calculating two different chromatic dispersion values of the optical device, in accordance with the two light intensities, respectively;

measuring two different propagation times of two reflected lights one of which is caused by any one light of one pair of the two pairs of lights and transmitted from a predetermined point in the optical device, and the other of which is caused by any one light of the other pair of the two pairs of lights and transmitted from a predetermined point in the optical device, when the one light of the one pair of lights and the one light of the other pair of lights are individually inputted into the optical device; and

determining a sign of the chromatic dispersion value of the optical device, on the basis of the two chromatic dispersion values and the two propagation times.

According to the first, second, third or fourth aspect of the present invention, it is possible to realize a chromatic dispersion distribution measuring apparatus having a high functionality, without providing an apparatus for determining the sign of the chromatic dispersion value of the optical device to be measured, to the chromatic dispersion distribution measuring apparatus.
Preferably, the chromatic dispersion distribution measuring apparatus according to the first aspect of the present invention, further comprises:

a chromatic dispersion distribution calculating section for calculating a chromatic dispersion distribution with a sign, of the optical device, in accordance with the sign of the chromatic dispersion value of the optical device, determined by the sign determining section.

Preferably, the chromatic dispersion distribution measuring method according to the second aspect of the present invention, further comprises:

calculating a chromatic dispersion distribution with a sign, of the optical device, in accordance with the sign of the chromatic dispersion value of the optical device.

Preferably, the chromatic dispersion distribution measuring apparatus according to the third aspect of the present invention, further comprises:

a chromatic dispersion distribution calculating section for calculating a chromatic dispersion distribution with a sign, of the optical device, in accordance with the sign of the chromatic dispersion value of the optical device, determined by the sign determining section.

Preferably, the chromatic dispersion distribution measuring method according to the fourth aspect of the present invention, further comprises:

calculating a chromatic dispersion distribution with a sign, of the optical device, in accordance with the sign of the chromatic dispersion value of the optical device.

According to the apparatus or method as described above, it is possible to measure the chromatic dispersion distribution on the basis of the sign of the chromatic dispersion value of the optical device to be measured, without providing an apparatus for determining the sign of the chromatic dispersion value of the optical device to be measured, to the chromatic dispersion distribution measuring apparatus. Consequently, it is possible to realize a chromatic dispersion distribution measuring apparatus having a further high functionality of outputting correct chromatic dispersion distribution data.

Preferably, the chromatic dispersion distribution measuring apparatus according to the third aspect of the present invention, further comprises:

a first optical switching section for providing any two pairs of lights of lights emitted from the light sources, for every pair of lights, and any one light of one pair of the two pairs of lights and any one light of the other pair of the two pairs of lights, individually, to the optical device; and
a second optical switching section for providing two four-wave mixed lights caused by the two pairs of lights, to the intensity measuring section, individually, and two reflected lights caused by the one light of the one pair of the two pairs of lights and the one light of the other pair of the two pairs of lights, to the time measuring section, individually.

Preferably, the chromatic dispersion distribution measuring method according to the fourth aspect of the present invention, further comprises:

providing any two pairs of lights of the lights, for every pair of lights, and any one light of one pair of the two pairs of lights and any one light of the other pair of the two pairs of lights, individually, to the optical device; and
providing two four-wave mixed lights caused by the two pairs of lights, individually, to measure two different light intensities, and two reflected lights caused by the one light of the one pair of the two pairs of lights and the one light of the other pair of the two pairs of lights, individually, to measure two different propagation times.

In accordance with a fifth aspect of the present invention, a chromatic dispersion distribution measuring apparatus, comprises:

means for emitting at least four lights having different wavelengths from each other;
means for measuring two different light intensities of two four-wave mixed lights which are caused by any two pairs of lights of the lights and which are outputted from an optical device to be measured, as functions of transmission distances in the optical device, when the two pairs of lights are inputted into the optical device, for every pair of lights;
means for calculating two different chromatic dispersion values of the optical device, in accordance with the two light intensities, respectively;
means for measuring two different propagation times of two reflected lights one of which is caused by any one light of one pair of the two pairs of lights and transmitted from a predetermined point in the optical device, and the other of which is caused by any one light of the other pair of the two pairs of lights and transmitted from a predetermined point in the optical device, when the one light of the one pair of lights and the one light of the other pair of lights are individually inputted into the optical device; and
means for determining a sign of the chromatic dispersion value of the optical device, on the basis of the two chromatic dispersion values and the two propagation times.

Preferably, the chromatic dispersion distribution measuring apparatus according to the fifth aspect of the present invention, further comprises:

means for calculating a chromatic dispersion distribution with a sign, of the optical device, in accordance with the sign of the chromatic dispersion value of the optical device.

Preferably, the chromatic dispersion distribution measuring apparatus according to the fifth aspect of the present invention, further comprises:

means for providing any two pairs of lights of the lights, for every pair of lights, and any one light of one pair of the two pairs of lights and any one light of the other pair of the two pairs of lights, individually, to the optical device; and
means for providing two four-wave mixed lights caused by the two pairs of lights, individually, to measure two different light intensities, and two reflected lights caused by the one light of the one pair of the two pairs of lights and the one light of the other pair of the two pairs of lights , individually, to measure two different propagation times.

BRIEF DESCRIPTION OF THE DRAWINGS

The present invention will become more fully understood from the detailed description given hereinbelow and the accompanying drawings which are given by way of illustration only, and thus are not intended as a definition of the limits of the present invention, and wherein;

FIG. 1 is a block diagram showing a structure of an optical fiber chromatic dispersion distribution measuring apparatus 100 to which the present invention is applied;
FIG. 2 is a graph showing an intensity distribution of a FWM light outputted from an OTDR 11 of the optical fiber chromatic dispersion distribution measuring apparatus 100 shown in FIG. 1;
FIG. 3 is a flow chart for explaining a process for calculating a chromatic dispersion distribution in a fiber 14 to be measured, in the optical fiber chromatic dispersion distribution measuring apparatus 100 shown in FIG. 1; and
FIG. 4 is a flow chart for explaining a process for determining a sign of the chromatic dispersion distribution in the optical fiber chromatic dispersion distribution measuring apparatus 100 shown in FIG. 1.

PREFERRED EMBODIMENT OF THE INVENTION

Hereinafter, an embodiment of the present invention will be explained in detail with reference to FIGS. 1 to 4.

Firstly, the structure of the embodiment will be explained.
FIG. 1 is a block diagram showing a structure of an optical fiber chromatic dispersion distribution measuring apparatus 100 to which the present invention is applied.
In FIG. 1, the optical fiber chromatic dispersion distribution measuring apparatus 100 comprises four distributed feedback-laser diodes (DFB-LD) 1 to 4, two couplers 5a and 5b, two optical switches 6a and 6b, an acoustooptic device 7, an erbium-doped fiber amplifier (EDFA) 8, a directional coupler 9, two optical bandpass filters (BPF) 10a and 10b, an optical time domain reflectometer (OTDR) 11, a personal computer (PC) 12, a wavelength measuring unit 13, and so on. Further, a fiber 14 to be measured is connected with the directional coupler 9 of the optical fiber chromatic dispersion distribution measuring apparatus 100.
The DFB-LDs 1 and 2 are light sources. The DFB-LD 1 emits a light having a wavelength $\lambda 1$. The DFB-LD 2 emits a light having a wavelength $\lambda 2$ which is different from the wavelength $\lambda 1$. The lights emitted from the DFB-LDs 1 and 2 are inputted to the optical switch 6a through the coupler 5a connected to the DFB-LDs 1 and 2.
The DFB-LDs 3 and 4 are light sources provided in order to determine the sign of the chromatic dispersion value of the fiber 14 to be measured. The DFB-LD 3 emits a light having a wavelength $\lambda 3$. The DFB-LD 4 emits a light having a wavelength $\lambda 4$ which is different from the wavelength $\lambda 3$. The lights emitted from the DFB-LDs 3 and 4 are inputted to the optical switch 6a through the coupler 5b connected to the DFB-LDs 3 and 4.
The large and small relationship between the wavelengths $\lambda 1$ and $\lambda 2$ of the lights emitted from the DFB-LDs 1 and 2 and the wavelengths $\lambda 3$ and $\lambda 4$ of the lights emitted from the DFB-LDs 3 and 4 satisfies the following inequality (2).

$$\lambda 1 \, (\lambda 2) < \lambda 3 \, (\lambda 4) \qquad (2)$$

The difference between the wavelength $\lambda 1$ ($\lambda 2$) and the wavelength $\lambda 3$ ($\lambda 4$) is sufficiently large. That is, the larger the difference between the wavelength $\lambda 1$ ($\lambda 2$) and the wavelength $\lambda 3$ ($\lambda 4$) is, the more correctly the sign of the chromatic dispersion distribution is determined.
The coupler (coupler unit) 5a couples two lights having the wavelengths $\lambda 1$ and $\lambda 2$ emitted from the DFB-LDs 1 and 2, respectively. Then, the coupler 5a outputs the coupled light to the optical switch 6a provided in the following position thereof. The coupler 5b couples two lights having the wavelengths $\lambda 3$ and $\lambda 4$ emitted from the DFB-LDs 3 and 4, respectively. Then, the coupler 5b outputs the coupled light to the optical switch 6a provided in the following position thereof.

The optical switch 6a outputs any one of the coupled light based on the lights having the wavelengths λ1 and λ2 outputted from the coupler 5a and the coupled light based on the lights having the wavelengths λ3 and λ4 outputted from the coupler 5b, to the acoustooptic device 7 provided in the following position thereof.

The optical switch 6b selects any one of the optical BPFs 10a and 10b provided in the following positions thereof, as a device to which each of all reflected lights outputted from the fiber 14 to be measured is inputted. Therefore, the optical switch 6b outputs each reflected light to selected one of the optical BPFs 10a and 10b.

The acoustooptic device 7 forms the waveform of the light inputted through the optical switch 6a to the pulse form, and outputs the formed pulse light to the EDFA 8.

The EDFA (Erbium-Doped Fiber Amplifier) 8 amplifies the pulse light outputted from the acoustooptic device 7, and outputs the amplified pulse light to the directional coupler 9.

The directional coupler 9 outputs the pulse light amplified by the EDFA 8 to the fiber 14 to be measured. Further, the directional coupler 9 outputs the FWM light outputted from the fiber 14 to be measured, or the output lights (Herein, they are Fresnel reflected lights . ) corresponding to lights emitted from the DFB-LD 1 or 2 and the DFB-LD 3 or 4 respectively, outputted from the fiber 14 to be measured, to the optical switch 6b.

The optical BPF 10a passes a light (Herein, it is either a Stokes ray or an anti-Stokes ray. ) having a specific wavelength out of the FWM light caused by lights emitted from the DFB-LDs 1 and 2, outputted from the fiber 14 to be measured.

The optical BPF 10b passes a light (Herein, it is either a Stokes ray or an anti-Stokes ray. ) having a specific wavelength out of the FWM light caused by lights emitted from the DFB-LDs 3 and 4, outputted from the fiber 14 to be measured.

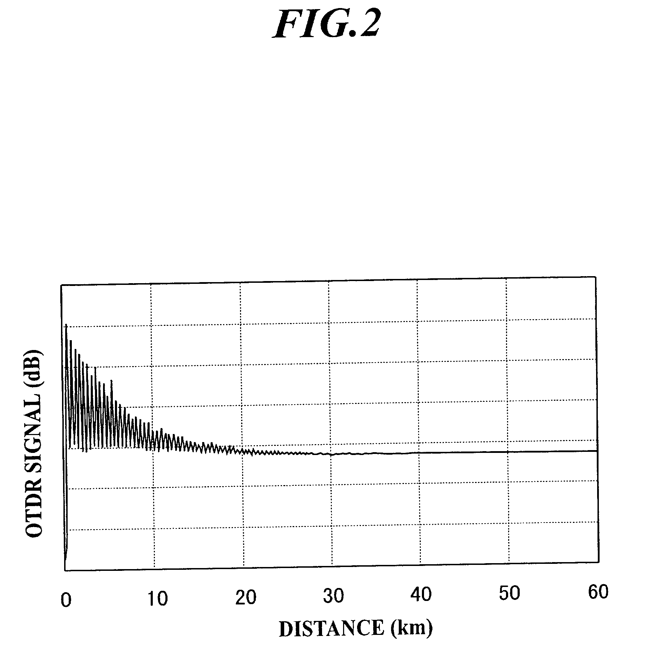

The OTDR 11 measures the loss distribution (the optical fiber chromatic dispersion distribution) for the light inputted into the fiber 14 to be measured, on the basis of the light (the Stokes ray or the anti-Stokes ray) passed through the optical BPF 10a or 10b. The OTDR 11 measures the intensity distribution data of the FWM light, shown in FIG. 2.

The PC (Personal Computer) 12 executes various types of operating processes related to data outputted from the OTDR 11. In particular, the PC 12 compares the chromatic dispersion value D1 corresponding to lights emitted from the DFB-LDs 1 and 2 with the chromatic dispersion value D2 corresponding to lights emitted from the DFB-LDs 3 and 4, in terms of values. Further, the PC 12 measures the propagation times T1 and T2 of the Fresnel reflected lights caused by lights emitted from the DFB-LD 1 or 2 and the DFB-LD 3 or 4 respectively, and compares the propagation time T1 with the propagation time T2, in terms of values.

Herein, in case the chromatic dispersion value increases with the increase of the propagation time of the light propagating through the optical fiber 14 to be measured, the sign of the chromatic dispersion value of the optical fiber 14 to be measured is a positive (+). On the other hand, in case the chromatic dispersion value decreases with the increase of the propagation time of the light, the sign of the chromatic dispersion value is a negative (-).

That is, the PC 12 determines whether the optical fiber chromatic dispersion distribution crosses a zero point or not. In case the PC 12 determines that the optical fiber chromatic dispersion distribution does not cross the zero point, the PC 12 determines whether the sign of the chromatic dispersion value of the fiber 14 to be measured is a positive or a negative on the basis of the relationship between the chromatic dispersion values D1 and D2 and the relationship between the propagation times T1 and T2.

For example, in case the PC 12 determines that the relationship between the chromatic dispersion values D1 and D2 satisfies "D1 < D2" , the PC 12 determines the sign of the chromatic dispersion value, as follows. When the PC 12 determines that the relationship between the propagation times T1 and T2 satisfies "T1 < T2", the PC 12 determines that the sign of the chromatic dispersion value is a positive (+). On the other hand, when the PC 12 determines that the relationship between the propagation times T1 and T2 satisfies "T1 > T2", the PC 12 determines that the sign of the chromatic dispersion value is a negative (-).

The wavelength measuring unit 13 monitors the waves of the coupled lights outputted from the couplers 5a and 5b.

When two lights having different wavelengths from each other, emitted from the DFB-LDs 1 and 2 or the DFB-LDs 3 and 4, are supplied to the fiber 14 to be measured through the directional coupler 9, the FWM light is generated in the fiber 14 to be measured, by the interaction between backscattered lights based on the two lights. Further, on a far surface of the fiber 14 to be measured, the Fresnel reflected light is generated by the mismatch of the reflective index.

Next, the operation of the embodiment will be explained with reference to FIGS. 2 to 4.

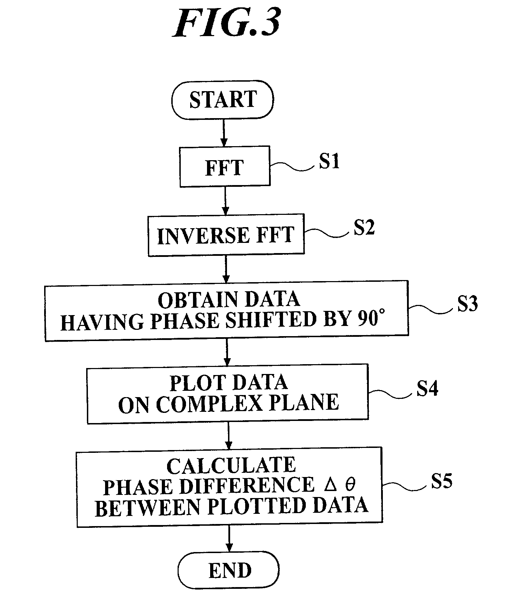

First, with reference to FIGS. 2 and 3, a process for calculating a chromatic dispersion distribution in the fiber 14 to be measured, on the basis of a waveform data of the FWM light outputted from the OTDR 11, will be explained.

FIG. 2 is a graph showing an intensity distribution of the FWM light outputted from the OTDR 11. FIG. 3 is a flow chart for explaining the process for calculating a chromatic dispersion distribution in the optical fiber 14 to be measured, in the optical fiber chromatic dispersion distribution measuring apparatus 100.

In FIG. 2, an abscissa axis represents a transmission distance (km; kilometer) in which the FWM light outputted from the OTDR 11 is transmitted through the fiber 14 to be measured. An ordinate axis represents an intensity (dB; decibel) of the FWM light, that is, an OTDR signal outputted from the OTDR 11.

As shown in FIG. 2, the intensity distribution data of the FWM light outputted from the OTDR 11 to the PC 12 shows the intensity of the FWM light transmitted from each point of the fiber 14 to be measured, as a function of the transmission distance. That is, the intensity distribution data cyclically varies (oscillates) with the transmission distance. Therefore, it is possible that the transmission distance corresponds to the phase $\theta (\lambda)$ in the cyclic variation (oscillation) of the intensity distribution.

As shown in FIG. 3, the PC 12 executes the fast Fourier transform (FFT) of the intensity distribution data of the FWM light outputted from the OTDR 11, in order to calculate the data expressed by a frequency spectrum (Step S1). Next, the PC 12 executes the inverse Fourier transform (inverse FFT) of only the data at positive frequencies in a plurality of the data expressed by the frequency spectrum (Step S2). Thereby, the PC 12 calculates the data having the phase shifted by 90° from the original intensity distribution data of the FWM light (Step S3).

Then, the PC 12 plots the data obtained in the Step S3 on a complex plane (Step S4). The PC 12 calculates a phase difference $\Delta\theta(\lambda)$ between each two adjacent plotted data (Step S5). Therefore, the PC 12 calculates a chromatic dispersion value in accordance with the calculated phase difference $\Delta\theta(\lambda)$.

Herein, the chromatic dispersion value calculated as described above is an absolute value, that is , a positive value.

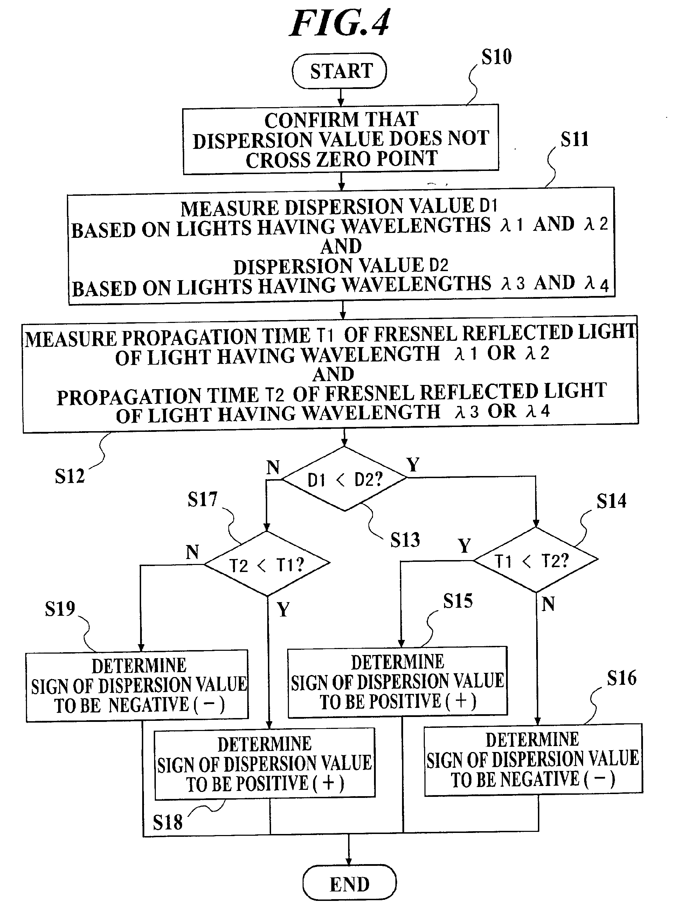

Next, with reference to FIGS. 2 and 4, a process for determining the sign of the chromatic dispersion value will be explained. FIG. 4 is a flow chart for explaining the process for determining the sign of the chromatic dispersion value, in the optical fiber chromatic dispersion distribution measuring apparatus 100.

As shown in FIG. 4, the PC 12 confirms that the chromatic dispersion distribution value of the fiber 14 to be measured, calculated in accordance with the intensity dispersion data of the FWM light outputted from the OTDR 11 does not cross a zero point (Step S10).

Then, the PC 12 measures the chromatic dispersion value D1 of the FWM light caused by the lights having the wavelengths $\lambda1$ and $\lambda2$, emitted from the DFB-LDs 1 and 2 and inputted through the optical BPF 10a and so on. Further, the PC 12 measures the chromatic dispersion value D2 of the FWM light caused by the lights having the wavelengths $\lambda3$ and $\lambda4$, emitted from the DFB-LDs 3 and 4 and inputted through the optical BPF 10b and so on (Step S11).

Then, the PC 12 measures the propagation time (time to come back from the Fresnel reflected point) T1 of the Fresnel reflected light caused by the light having the wavelength $\lambda1$ or $\lambda2$, emitted from the DFB-LD 1 or 2 according to the operation of the optical switch 6a, in the optical fiber 14 to be measured. Then, the PC 12 measures the propagation time T2 of the Fresnel reflected light caused by the light having the wavelength $\lambda3$ or $\lambda4$, emitted from the DFB-LD 3 or 4 according to the operation of the optical switch 6a, in the fiber 14 to be measured (Step S12).

Then, the PC 12 determines whether the chromatic dispersion value D2 is larger than the chromatic dispersion value D1 or not (Step S13).

In Step S13, in case the PC 12 determines that the chromatic dispersion value D2 is larger than the chromatic dispersion value D1 (Step S13; Y), the PC 12 determines whether the propagation time T2 is longer than the propagation time T1 or not, wherein the propagation times T1 and T2 are measured in Step S12 (Step S14).

In Step S14, in case the PC 12 determines that the propagation time T2 is longer than the propagation time T1 (Step S14; Y) , the PC 12 determines the sign of the chromatic dispersion distribution value in the fiber 14 to be measured to be a positive (+) (Step S15). In case the PC determines that the propagation time T2 is not longer than the propagation time T1, that is, the propagation time T1 is longer than the propagation time T2 (Step S14; N), the PC 12 determines the sign of the chromatic dispersion distribution value in the fiber 14 to be measured to be a negative (-) (Step S16).

In step S13, in case the PC 12 determines that the chromatic dispersion value D2 is not larger than the chromatic dispersion value D1, that is, the chromatic dispersion value D1 is larger than the chromatic dispersion value D2 (Step S13; N), the PC 12 determines whether the propagation time T1 is longer than the propagation time T2 or not, whether the propagation times T1 and T2 are measured in Step S12 (Step S17).

In Step S17, in case the PC 12 determines that the propagation time T1 is longer than the propagation time T2 (Step S17; Y), the PC 12 determines the sign of the chromatic dispersion distribution value in the fiber 14 to be measured to be a positive (+) (Step S18). In case the PC determines that the propagation time T1 is not longer than the propagation time T2, that is, the propagation time T2 is longer than the propagation time T1 (Step S17; N), the PC 12 determines the sign of the chromatic dispersion distribution value in the fiber 14 to be measured to be a negative (-) (Step S19).

As described above, the optical fiber chromatic dispersion distribution measuring apparatus 100 to which the present invention is applied comprises four DFB-LDs 1 to 4 as light sources in order to determine the chromatic dispersion distribution of the fiber 14 to be measured and the sign of the chromatic dispersion distribution. The optical fiber chromatic dispersion distribution measuring apparatus 100 measures the propagation times T1 and T2 of the Fresnel reflected lights caused by the lights emitted from the DFB-LD 1 or 2 and the DFB-LD 3 or 4 respectively.

The optical fiber chromatic dispersion distribution measuring apparatus 100 determines the sign of the chromatic dispersion distribution to be a positive (+) in case the chromatic dispersion value D2 is larger than the chromatic dispersion value D1 and the propagation time T2 is longer than the propagation time T1, or in case the chromatic dispersion value D1 is larger than the chromatic dispersion value D2 and the propagation time T1 is longer than the propagation time T2. On the other hand, the optical fiber chromatic dispersion distribution measuring apparatus 100 determines the sign of the chromatic dispersion distribution to be a negative (-) in case except the above-described case.

The chromatic dispersion distribution measuring apparatus according to an earlier development can measure only the absolute value of the chromatic dispersion distribution in the fiver 14 to be measured. However, because the chromatic dispersion distribution measuring apparatus according to the present invention further comprises two DFB-LDs 3 and 4 and two optical switches 6a and 6b, it is possible that the chromatic dispersion distribution measuring apparatus determines the sign of the chromatic dispersion distribution easily.

That is, it is possible to provide the optical fiber dispersion distribution measuring apparatus 100 comprising a superior functionality of easily determining the sign of the chromatic dispersion distribution, without further providing an apparatus for determining the sign of the chromatic dispersion distribution to the measuring apparatus and complicating the structure of the whole measuring apparatus.

According to the present invention, some effects will be indicated, as follows.

As described above, it is possible to realize a chromatic dispersion distribution measuring apparatus having a high functionality, without providing an apparatus for determining the sign of the chromatic dispersion value of the optical device to be measured, to the chromatic dispersion distribution measuring apparatus.

Further, it is possible to measure the chromatic dispersion distribution on the basis of the sign of the chromatic dispersion value of the optical device to be measured, without providing an apparatus for determining the sign of the chromatic dispersion value of the optical device to be measured, to the chromatic dispersion distribution measuring apparatus. Consequently, it is possible to realize a chromatic dispersion distribution measuring apparatus having a further high functionality of outputting correct chromatic dispersion distribution data.

The entire disclosure of Japanese Patent Application No. Tokugan 2001-58538 filed on March 2, 2001 including specification, claims drawings and summary are incorporated herein by reference in its entirety.

**Claims**

1. A chromatic dispersion distribution measuring apparatus, comprising:

   a plurality of light sources for emitting lights having different wavelengths from each other; an intensity measuring section for measuring a light intensity of a four-wave mixed light which is caused by any two lights of lights emitted from the plurality of light sources and which is outputted from an optical device to be measured, as a function of a transmission distance in the optical device, when the two lights are inputted into the optical device; a chromatic dispersion calculating section for calculating a chromatic dispersion value of the optical device, in accordance with the light intensity measured by the intensity measuring section, as the function of the transmission distance; a time measuring section for measuring a propagation time of a reflected light which is caused by each light of lights emitted from the plurality of light sources and which is transmitted from a predetermined point in the optical device, when each light is inputted into the optical device; and a sign determining section for determining a sign of the chromatic dispersion value of the optical device, on the basis of two different chromatic dispersion values calculated by the chromatic dispersion calculating section, and two propagation times of reflected lights caused by two lights related to the two chromatic dispersion values respectively, of lights emitted from the plurality of light sources.

2. The chromatic dispersion distribution measuring apparatus as claimed in claim 1, further comprising:

   a chromatic dispersion distribution calculating section for calculating a chromatic dispersion distribution with a sign, of the optical device, in accordance with the sign of the chromatic dispersion value of the optical device, determined by the sign determining section.

3. A chromatic dispersion distribution measuring method, comprising:

   emitting a plurality of lights having different wavelengths from each other; measuring a light intensity of a four-wave mixed light which is caused by any two lights of the plurality of lights and which is outputted from an optical device to be measured, as a function of a transmission distance in the optical device, when the two lights are inputted into the optical device;

calculating a chromatic dispersion value of the optical device, in accordance with the light intensity measured as the function of the transmission distance;

measuring a propagation time of a reflected light which is caused by each light of the plurality of lights and which is transmitted from a predetermined point in the optical device, when each light is inputted into the optical device; and

determining a sign of the chromatic dispersion value of the optical device, on the basis of two different chromatic dispersion values and two propagation times of reflected lights caused by two lights related to the two chromatic dispersion values respectively, of the plurality of lights.

4. The chromatic dispersion distribution measuring method as claimed in claim 3, further comprising:

calculating a chromatic dispersion distribution with a sign, of the optical device, in accordance with the sign of the chromatic dispersion value of the optical device.

5. A chromatic dispersion distribution measuring apparatus, comprising:

at least four light sources for emitting lights having different wavelengths from each other;

an intensity measuring section for measuring two different light intensities of two four-wave mixed lights which are caused by any two pairs of lights of lights emitted from the light sources and which are outputted from an optical device to be measured, as functions of transmission distances in the optical device, when the two pairs of lights are inputted into the optical device, for every pair of lights;

a chromatic dispersion calculating section for calculating two different chromatic dispersion values of the optical device, in accordance with the two light intensities measured by the intensity measuring section, respectively;

a time measuring section for measuring two different propagation times of two reflected lights one of which is caused by any one light of one pair of the two pairs of lights and transmitted from a predetermined point in the optical device, and the other of which is caused by any one light of the other pair of the two pairs of lights and transmitted from a predetermined point in the optical device, when the one light of the one pair of lights and the one light of the other pair of lights are individually inputted into the optical device; and

a sign determining section for determining a sign of the chromatic dispersion value of the optical device, on the basis of the two chromatic dispersion values calculated by the chromatic dispersion calculating section, and the two propagation times measured by the time measuring section.

6. The chromatic dispersion distribution measuring apparatus as claimed in claim 5, further comprising:

a chromatic dispersion distribution calculating section for calculating a chromatic dispersion distribution with a sign, of the optical device , in accordance with the sign of the chromatic dispersion value of the optical device, determined by the sign determining section.

7. The chromatic dispersion distribution measuring apparatus as claimed in claim 5, further comprising:

a first optical switching section for providing any two pairs of lights of lights emitted from the light sources, for every pair of lights, and any one light of one pair of the two pairs of lights and any one light of the other pair of the two pairs of lights, individually, to the optical device; and

a second optical switching section for providing two four-wave mixed lights caused by the two pairs of lights, to the intensity measuring section, individually, and two reflected lights caused by the one light of the one pair of the two pairs of lights and the one light of the other pair of the two pairs of lights, to the time measuring section, individually.

8. A chromatic dispersion distribution measuring method, comprising:

emitting at least four lights having different wavelengths from each other;

measuring two different light intensities of two four-wave mixed lights which are caused by any two pairs of lights of the lights and which are outputted from an optical device to be measured, as functions of transmission distances in the optical device, when the two pairs of lights are inputted into the optical device, for every pair of lights;

calculating two different chromatic dispersion values of the optical device, in accordance with the two light intensities, respectively;

measuring two different propagation times of two reflected lights one of which is caused by any one light of one pair of the two pairs of lights and transmitted from a predetermined point in the optical device, and the other of which is caused by any one light of the other pair of the two pairs of lights and transmitted from a predetermined point in the optical device, when the one light of the one pair of lights and the one light of the other pair of lights are individually inputted into the optical device; and determining a sign of the chromatic dispersion value of the optical device, on the basis of the two chromatic dispersion values and the two propagation times.

9. The chromatic dispersion distribution measuring method as claimed in claim 8, further comprising:

calculating a chromatic dispersion distribution with a sign, of the optical device, in accordance with the sign of the chromatic dispersion value of the optical device.

10. The chromatic dispersion distribution measuring method as claimed in claim 8, further comprising:

providing any two pairs of lights of the lights, for every pair of lights, and any one light of one pair of the two pairs of lights and any one light of the other pair of the two pairs of lights, individually, to the optical device; and providing two four-wave mixed lights caused by the two pairs of lights, individually, to measure two different light intensities, and two reflected lights caused by the one light of the one pair of the two pairs of lights and the one light of the other pair of the two pairs of lights, individually, to measure two different propagation times.

11. A chromatic dispersion distribution measuring apparatus, comprising:

means for emitting at least four lights having different wavelengths from each other; means for measuring two different light intensities of two four-wave mixed lights which are caused by any two pairs of lights of the lights and which are outputted from an optical device to be measured, as functions of transmission distances in the optical device, when the two pairs of lights are inputted into the optical device, for every pair of lights; means for calculating two different chromatic dispersion values of the optical device, in accordance with the two light intensities, respectively; means for measuring two different propagation times of two reflected lights one of which is caused by any one light of one pair of the two pairs of lights and transmitted from a predetermined point in the optical device , and the other of which is caused by any one light of the other pair of the two pairs of lights and transmitted from a predetermined point in the optical device, when the one light of the one pair of lights and the one light of the other pair of lights are individually inputted into the optical device; and means for determining a sign of the chromatic dispersion value of the optical device, on the basis of the two chromatic dispersion values and the two propagation times.

12. The chromatic dispersion distribution measuring apparatus as claimed in claim 11, further comprising:

means for calculating a chromatic dispersion distribution with a sign, of the optical device, in accordance with the sign of the chromatic dispersion value of the optical device.

13. The chromatic dispersion distribution measuring apparatus as claimed in claim 11, further comprising:

means for providing any two pairs of lights of the lights, for every pair of lights, and any one light of one pair of the two pairs of lights and any one light of the other pair of the two pairs of lights, individually, to the optical device; and means for providing two four-wave mixed lights caused by the two pairs of lights, individually, to measure two different light intensities, and two reflected lights caused by the one light of the one pair of the two pairs of lights and the one light of the other pair of the two pairs of lights, individually, to measure two different propagation times.

## FIG.1

WAVELENGTH

DFB-LD λ1

DFB-LD λ2

COUPLER 5a

WAVELENGTH MEASURING UNIT 13

1 2

DFB-LD λ3

DFB-LD λ4

3 4

COUPLER 5b

OPTICAL SWITCH

6a

ACOUSTOOPTIC DEVICE 7

EDFA 8

DIRECTIONAL COUPLER 9

100

FIBER TO BE MEASURED 14

PC 12

OTDR 11

OPTICAL BPF 10a

OPTICAL BPF 10b

OPTICAL SWITCH 6b

EP 1 236 985 A2

# FIG.2

# *FIG.3*

```
        ┌─────────────┐
        │    START    │
        └─────────────┘
               │
               ▼
        ┌─────────────┐
        │     FFT     │───── S1
        └─────────────┘
               │
               ▼
       ┌───────────────┐
       │  INVERSE FFT  │───── S2
       └───────────────┘
               │
               ▼
  ┌──────────────────────────────────┐
  │           OBTAIN DATA            │───── S3
  │  HAVING PHASE SHIFTED BY 90°     │
  └──────────────────────────────────┘
               │
               ▼
     ┌──────────────────────────┐
     │         PLOT DATA        │───── S4
     │     ON COMPLEX PLANE     │
     └──────────────────────────┘
               │
               ▼
   ┌────────────────────────────────┐
   │           CALCULATE            │───── S5
   │  PHASE DIFFERENCE Δθ           │
   │    BETWEEN PLOTTED DATA         │
   └────────────────────────────────┘
               │
               ▼
        ┌─────────────┐
        │     END     │
        └─────────────┘
```

# *FIG.4*

START — S10

CONFIRM THAT
DISPERSION VALUE DOES NOT
CROSS ZERO POINT — S11

MEASURE DISPERSION VALUE D1
BASED ON LIGHTS HAVING WAVELENGTHS $\lambda 1$ AND $\lambda 2$
AND
DISPERSION VALUE D2
BASED ON LIGHTS HAVING WAVELENGTHS $\lambda 3$ AND $\lambda 4$

MEASURE PROPAGATION TIME T1 OF FRESNEL REFLECTED LIGHT
OF LIGHT HAVING WAVELENGTH $\lambda 1$ OR $\lambda 2$
AND
PROPAGATION TIME T2 OF FRESNEL REFLECTED LIGHT
OF LIGHT HAVING WAVELENGTH $\lambda 3$ OR $\lambda 4$

S12

N ← D1 < D2? → Y

S13

S17 — N ← T2 < T1? → Y

S14 — Y ← T1 < T2? → N

S15

S19
DETERMINE
SIGN OF DISPERSION VALUE
TO BE NEGATIVE ( − )

DETERMINE
SIGN OF DISPERSION VALUE
TO BE POSITIVE ( + )

S16
DETERMINE
SIGN OF DISPERSION VALUE
TO BE NEGATIVE ( − )

DETERMINE
SIGN OF DISPERSION VALUE
TO BE POSITIVE ( + )
S18

END